# FASCICULE DE BREVET EUROPEEN

(11) **EP 3 297 111 B1**
(45) Date de publication et mention de la délivrance du brevet: **12.06.2019**
(21) Numéro de dépôt: 17176548.0
(22) Date de dépôt: 19.06.2017
(51) Int. Cl.: H02H 3/04, H02H 3/05, H02H 3/08

(54) **DISPOSITIF ET PROCEDE DE SURVEILLANCE DE L'ACTIVITE D'UNITES DE TRAITEMENT DANS UN DECLENCHEUR ELECTRIQUE**
VORRICHTUNG UND VERFAHREN ZUR ÜBERWACHUNG DER AKTIVITÄT DER VERARBEITUNGSEINHEITEN IN EINEM ELEKTRISCHEN AUSLÖSER
DEVICE AND METHOD FOR MONITORING THE ACTIVITY OF PROCESSING UNITS IN AN ELECTRIC TRIP SWITCH

(30) Priorité: 15.09.2016 FR 1658609
(43) Date de publication de la demande: 21.03.2018
(73) Titulaire: Schneider Electric Industries SAS, 92500 Rueil-Malmaison (FR)
(72) Inventeur: BLANCHARD, Pierre, 38050 GRENOBLE (FR); BERNARD, Jean-Baptiste, 38050 GRENOBLE (FR)
(74) Mandataire: Tripodi, Paul

(56) Documents cités:
- EP-A1- 0 690 597
- CN-Y- 201 315 470
- FR-A1- 2 602 618
- US-A1- 2006 193 099

## Description

### DOMAINE TECHNIQUE

L'invention a pour objet un dispositif de surveillance de l'activité de plusieurs unités de traitement destinées au fonctionnement d'un déclencheur électrique. L'invention concerne aussi un disjoncteur destiné à la protection d'une installation électrique équipé d'un déclencheur électrique comportant un tel dispositif de surveillance d'activité. L'invention concerne également un procédé de surveillance du fonctionnement d'un déclencheur électrique comportant au moins deux unités de traitement.

### ETAT DE LA TECHNIQUE

De très nombreux équipements utilisent, pour leur fonctionnement, une ou plusieurs unités de traitement telles que des microprocesseurs, ASICs ou des composants programmables spécifiques. Ces unités de traitement permettent la mise en oeuvre de fonctionnalités complexes, utilisant du logiciel ou des modules programmables. Il arrive cependant que le programme exécute des opérations incertaines en cas d'événement ou de configuration n'ayant pas été pris en compte lors de la conception. Dans ce cas, un dispositif généralement appelé « chien de garde » est prévu pour détecter une anomalie dans l'activité de ces circuits. Il fonctionne parallèlement à l'unité de traitement et réagit, en cas de détection d'anomalie, par exemple en forçant un redémarrage de l'équipement ou en imposant un passage de l'équipement dans un mode de sécurité.

La demande de brevet US 2006/193099 A1 montre un premier exemple de dispositif connu de système et méthode de test de dispositifs électroniques intelligents.

On connait le document FR 2 602 618 relatif à un chien de garde surveillant l'activité d'un microprocesseur utilisé pour assurer la fonction déclenchement d'un disjoncteur. Le chien de garde est constitué d'un circuit monostable remis à zéro par des impulsions générées par le microprocesseur. Si le microprocesseur ne génère plus d'impulsions, le monostable génère une réinitialisation du microprocesseur dans un premier temps puis un déclenchement si le microprocesseur ne fonctionne toujours pas correctement. Ce dispositif très simple est bien adapté à une configuration comportant un seul microprocesseur.

On connait le document EP 2 466 712 décrivant un dispositif de surveillance apte à vérifier l'intégrité fonctionnelle d'un microprocesseur assumant des fonctions de sécurité. Ce dispositif utilise des données d'entrée traitées parallèlement par le microprocesseur à surveiller et par le dispositif de surveillance constitué de circuits effectuant des opérations logiques. Le résultat de chacun des traitements est comparé et une mise en situation de sécurité est initialisée quand les résultats sont différents. Ce dispositif est présenté comme étant une alternative économique intéressante à l'utilisation d'un second microprocesseur dédié à la surveillance du premier microprocesseur.

Il existe cependant des équipements utilisant au moins deux unités de traitement, chacune des unités de traitement étant conçue pour remplir une ou plusieurs fonctions spécifiques : par exemple, un premier microprocesseur est optimisé pour assurer des fonctions de sécurité alors qu'un second microprocesseur pourra être destiné à effectuer des calculs sur la base de mesures effectuées au moyen de capteurs ou des traitements basés sur les événements intervenus dans l'installation électrique. Ces équipements nécessitent également une surveillance permanente de leur fonctionnement, cette surveillance ne devant pas perturber les tâches exécutées par chaque unité de traitement, ni induire de surcoût important.

### EXPOSE DE L'INVENTION

L'invention a pour but un dispositif et un procédé de surveillance permettant de signaler ou d'activer un organe de déclenchement en cas de détection d'anomalie de l'activité d'unités de traitement dans un déclencheur électrique.

Selon l'invention, le dispositif de surveillance surveille l'activité d'au moins une première et une seconde unités de traitement équipant un déclencheur électrique, la première unité de traitement comportant un premier circuit indicateur d'activité émettant un premier signal d'activité sur une première sortie d'activité, le dispositif de surveillance étant tel que:
- la première unité de traitement comporte, en outre,
   - une première entrée pour recevoir un second signal d'activité, et
   - un premier circuit de surveillance, connecté à la première entrée, pour surveiller l'activité de la seconde unité de traitement, le premier circuit de surveillance comparant le second signal d'activité (42) reçu sur la première entrée (18) à un premier signal de référence (15) et activant un premier circuit de déclenchement (11) quand le second signal d'activité (42) est différent du premier signal de référence (15), et
- la seconde unité de traitement comporte :
   - une seconde entrée pour recevoir le premier signal d'activité,
   - un second circuit indicateur d'activité émettant le second signal d'activité sur une seconde sortie d'activité, et
   - un second circuit de surveillance, connecté à la seconde entrée, pour surveiller l'activité de la première unité de traitement.
   le premier circuit de déclenchement disposant d'une première sortie de commande, connectée à une entrée de commande d'un premier circuit de commande, pour activer ledit premier circuit de commande.

Avantageusement, le second circuit de surveillance compare le premier signal d'activité reçu sur la seconde entrée à un second signal de référence et active une sortie auxiliaire quand le premier signal d'activité est différent du second signal de référence.

Avantageusement, la première sortie d'activité est connectée à la première sortie de commande et la seconde entrée est connectée à l'entrée de commande du premier circuit de commande pour recevoir le premier signal d'activité.

Dans un mode de réalisation particulier, un second circuit de commande de l'actionneur est connecté en parallèle avec le premier circuit de commande de l'actionneur et la seconde unité de traitement comporte un second circuit de déclenchement, connecté au second circuit de commande, pour activer ledit second circuit de commande.

Avantageusement, la seconde sortie d'activité est connectée au second circuit de commande de l'actionneur.

Préférentiellement, le second circuit de surveillance compare le premier signal d'activité reçu sur la seconde entrée au second signal de référence et active le second circuit de déclenchement quand le premier signal d'activité est différent du second signal de référence.

Avantageusement, la durée du premier signal d'activité ou du second signal d'activité est significativement inférieure à la durée du signal d'activation du premier circuit de commande d'actionneur ou du second circuit de commande d'actionneur.

De préférence, la durée du premier signal d'activité ou du second signal d'activité est comprise entre 1 et 10 µs et la période entre deux signaux d'activité consécutifs est sensiblement égale à 10 ms.

L'invention porte aussi sur un disjoncteur destiné à la protection d'une installation électrique comportant :
- des capteurs de courant délivrant un signal représentatif du courant circulant dans des conducteurs de courant,
- des contacts électriques,
- un mécanisme d'ouverture des contacts,
- un actionneur de déclenchement pour actionner le mécanisme d'ouverture des contacts, et
- un déclencheur électrique comportant une première unité de traitement et une seconde unité de traitement, ledit déclencheur étant connecté aux capteurs de courant et à l'actionneur pour fournir une commande de déclenchement en fonction du signal délivré par lesdits capteurs de courant, ledit déclencheur comportant un dispositif de surveillance tel que décrit précédemment.

Le disjoncteur est tel que, dans le déclencheur électrique :
- la première unité de traitement active le premier circuit de déclenchement quand le signal représentatif du courant circulant dans des conducteurs de courant dépasse un seuil de surintensité déterminé, et
- la seconde unité de traitement effectue des calculs de puissance et/ou d'énergie.

L'invention porte également sur un procédé de surveillance de l'activité d'au moins une première et une seconde unités de traitement destinées au fonctionnement d'un déclencheur électrique comportant un dispositif de surveillance de l'activité tel que décrit précédemment, ledit procédé comportant les étapes suivantes :
- une émission par la première unité de traitement du premier signal d'activité,
- une réception par la première unité de traitement du second signal d'activité, et parallèlement,
- une réception par la seconde unité de traitement du premier signal d'activité,
- une émission par la seconde unité de traitement du second signal d'activité,
- une comparaison du second signal d'activité reçu par la première unité de traitement à un premier signal de référence, et
- une activation de la première sortie de commande de l'actionneur quand le second signal d'activité est différent du premier signal de référence, sinon un retour à l'étape d'émission du premier signal d'activité.

Avantageusement, le procédé comporte, en outre, les étapes suivantes :
- une comparaison du premier signal d'activité reçu par la seconde unité de traitement à un second signal de référence, et
- une activation de la sortie auxiliaire quand le premier signal d'activité est différent du second signal de référence.

Préférentiellement, le procédé comporte également une étape d'activation de la seconde sortie de commande quand le premier signal d'activité est différent du second signal de référence.

### BREVE DESCRIPTION DES DESSINS

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
- la figure 1 représente schématiquement un dispositif de surveillance d'un déclencheur électrique comportant deux unités de traitement selon un premier mode de réalisation de l'invention,
- la figure 2 représente schématiquement une variante du dispositif de surveillance d'un déclencheur électrique selon un second mode de réalisation permettant de surveiller des liaisons entre circuits,
- la figure 3 illustre une forme d'onde d'un signal d'activité émis par une unité de traitement ainsi qu'une onde d'activation d'un circuit de déclenchement,
- la figure 4 représente un schéma du dispositif de surveillance selon un mode de réalisation préférentiel permettant d'accroitre la sûreté de fonctionnement et la rapidité de réaction à une défaillance du déclencheur électrique par rapport au premier mode de réalisation,
- la figure 5 est une représentation schématique d'un disjoncteur comportant un déclencheur électrique intégrant un dispositif de surveillance selon l'invention,
- la figure 6 représente un organigramme illustrant le fonctionnement du procédé de surveillance selon le premier mode de réalisation de l'invention, et
- la figure 7 représente un organigramme illustrant le fonctionnement du procédé de surveillance selon le mode de réalisation préféré de l'invention.

### DESCRIPTION DETAILLEE DE MODES DE REALISATION PREFERES

On entend par unité de traitement tout dispositif permettant d'effectuer :
- des mesures de grandeurs physiques telles que des courants, des tensions, des températures,
- des calculs prenant en compte ces mesures tels que calculs de valeur efficace, valeur crête, valeur moyenne des grandeurs physiques,
- des comparaisons à des seuils afin de générer des messages d'information ou des alarmes, et
- des commandes d'activation d'organes mécaniques ou électromécaniques.

Une unité de traitement peut être mise en oeuvre au moyen d'un microprocesseur, ou un microcontrôleur, ou un ASIC (en anglais « Application Specific Integrated Circuit ») ou encore un FPGA (en anglais « Field Programmable Gate Array »), cette liste étant non limitative.

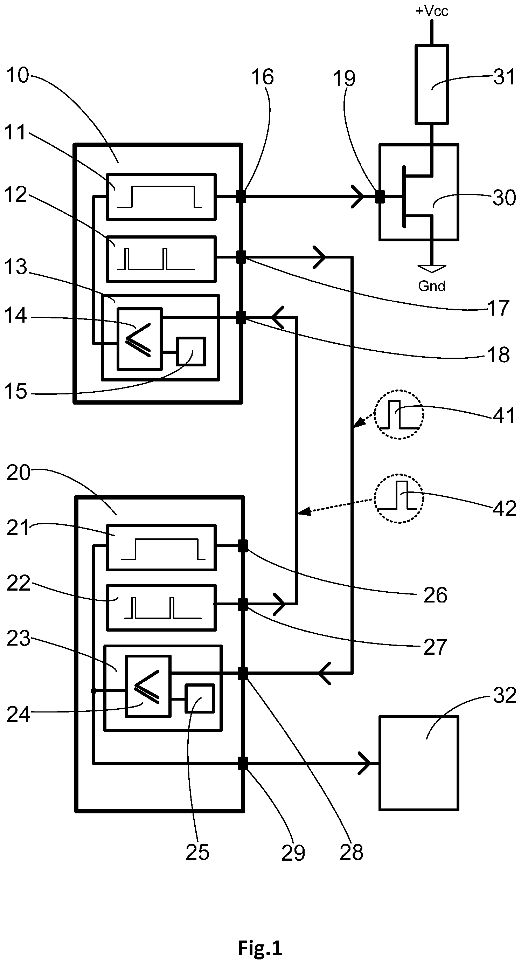

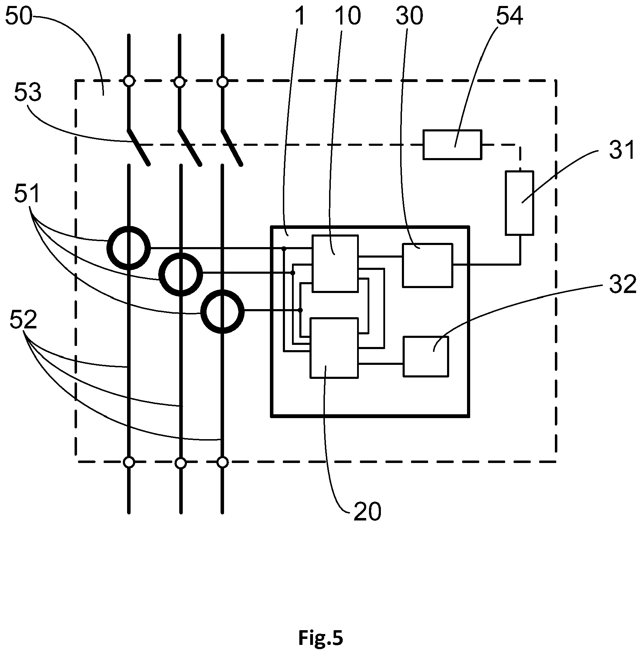

La figure 1 représente schématiquement une implantation d'un dispositif de surveillance dans un déclencheur électrique comportant deux unités de traitement 10, 20 selon un premier mode de réalisation de l'invention. Une première unité de traitement 10, préférentiellement destinée à exécuter des fonctions de protection d'un réseau électrique, comporte un premier circuit de déclenchement 11, relié à une entrée 19 d'un circuit de commande d'actionneur 30 à travers une sortie 16. Le circuit de commande d'actionneur 30 est préférentiellement constitué par un transistor MOS ayant une fonction de commutation. Le circuit de commande de l'actionneur 30 est relié à un actionneur 31 dont l'utilisation sera détaillée ultérieurement à la figure 5.

La première unité de traitement 10 comprend également un premier circuit indicateur d'activité 12. Ledit circuit surveille le fonctionnement de l'unité de traitement 10 et émet un premier signal d'activité 41 sur une première sortie d'activité 17. Le signal d'activité 41 est représentatif de l'activité de la première unité de traitement 10. Préférentiellement, le premier signal d'activité 41 est émis périodiquement, selon une période d'émission T2 correspondant, par exemple, à la durée d'un cycle complet de traitement effectué par l'unité de traitement. Ledit premier signal d'activité 41 a une durée T1 représentative, par exemple, de la durée d'exécution d'une fonction spécifique et essentielle que doit exécuter l'unité de traitement ou encore représente la matérialisation du passage dans une tâche spécifique de son programme.

Une seconde unité de traitement 20 est, par exemple, destinée à exécuter des mesures de paramètres électriques d'une installation électrique et signaler d'éventuels écarts par rapport à des valeurs de consigne. Ladite seconde unité de traitement est préférentiellement dimensionnée pour traiter les mesures, effectuer des calculs par exemple de puissance, d'énergie, de fréquence, de distorsion, de taux d'harmonique, cette liste étant non limitative. De la même façon que dans la première unité de traitement 10, la seconde unité de traitement 20 comprend un second circuit indicateur d'activité 22. L'indicateur d'activité 22 émet un second signal d'activité 42 sur une seconde sortie d'activité 27. Le signal d'activité 42 est représentatif de l'activité de la seconde unité de traitement 20. De façon similaire au premier circuit indicateur d'activité, le second signal d'activité 42 est émis périodiquement selon une période d'émission correspondant, par exemple, à la durée d'un cycle complet de traitement effectué par ladite seconde unité de traitement 20. Le second signal d'activité 42 a une durée représentative, par exemple, du temps d'exécution d'une fonction spécifique mobilisant l'ensemble des ressources de la seconde unité de traitement 20.

La première unité de traitement 10 comporte un premier circuit de surveillance 13, relié au second circuit indicateur d'activité 22 par une liaison issue de la seconde sortie d'activité 27. Ladite liaison traverse une première entrée 18 de la première unité de traitement 10. Le second signal d'activité 42 est ainsi reçu par le premier circuit de surveillance 13. Ledit premier circuit de surveillance 13 compare, au moyen d'un comparateur 14, le second signal d'activité 42 reçu sur la première entrée 18 à un premier signal de référence 15 et active le premier circuit de déclenchement 11 quand le second signal d'activité 42 est différent du premier signal de référence 15. La différence par rapport au signal de référence 15 porte préférentiellement sur l'écart sur la durée de l'impulsion T1 et/ou l'écart sur la période T2 entre deux signaux consécutifs. Par exemple un écart supérieur à +/-10% sur l'un ou l'autre des paramètres sera considéré comme une anomalie. En cas d'anomalie, le comparateur 14 active le premier circuit de déclenchement 11 qui, lui-même, active le circuit de commande d'actionneur 30 et l'actionneur 31. L'énergie nécessaire pour la commande et le fonctionnement de l'actionneur 31 est fournie par une alimentation délivrée entre une borne Vcc et un potentiel de référence Gnd.

De façon symétrique, la seconde unité de traitement 20 comporte un second circuit de surveillance 23, relié au premier circuit indicateur d'activité 12 par une liaison issue de la première sortie d'activité 17. Ladite liaison traverse une première entrée 28 de la seconde unité de traitement. Le premier signal d'activité 41 est ainsi reçu par le second circuit de surveillance 23. Ledit second circuit de surveillance 23 compare, au moyen d'un comparateur 24, le premier signal d'activité 41 reçu sur la seconde entrée 28 à un second signal de référence 25 et émet un signal de commande d'auxiliaire sur une sortie auxiliaire 29 à laquelle il est relié quand le premier signal d'activité 41 est différent du second signal de référence 25. De la même façon que pour la première unité de traitement, la différence par rapport au signal de référence 25 porte préférentiellement sur l'écart sur la durée de l'impulsion et/ou l'écart sur la période entre deux signaux consécutifs. La seconde unité de traitement ayant préférentiellement à exécuter des opérations plus complexes mais moins critiques pour le fonctionnement du déclencheur électrique, l'écart tolérable pourra être plus important que dans le cas de la première unité de traitement. Par exemple, un écart supérieur à +/- 30% sur l'un des paramètres durée ou période sera considéré comme une anomalie.

La sortie auxiliaire 29 est connectée à un auxiliaire de commande 32. Ainsi, en cas de détection d'anomalie par le second circuit de surveillance 23, l'auxiliaire de commande 32 sera activé. Cet auxiliaire peut être, par exemple, une bobine externe de déclenchement d'un appareil de protection ou un dispositif de signalisation dans l'équipement, tel qu'un voyant, ou un moyen de communication vers un système de supervision, ces exemples étant donnés à titre d'exemples non limitatifs.

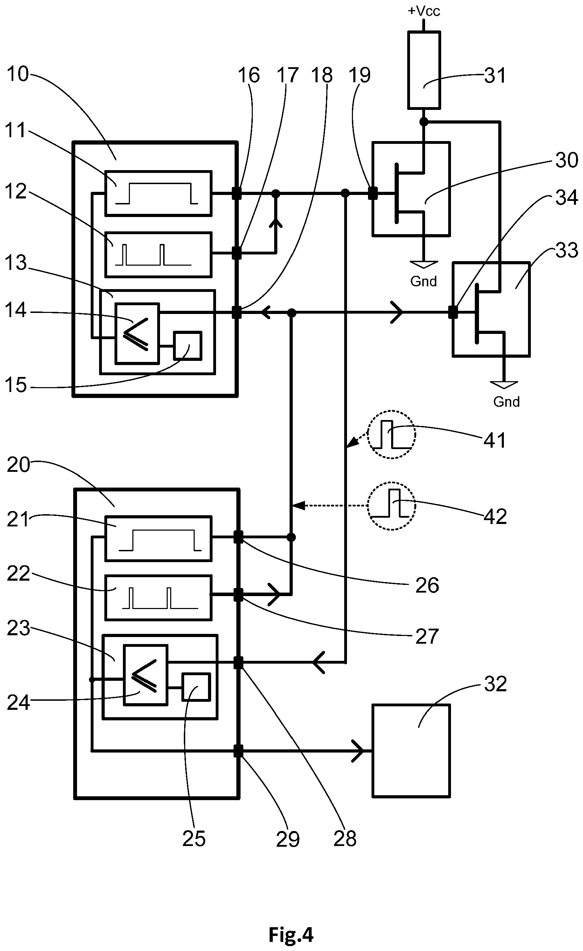

La seconde unité de traitement pourra, optionnellement, comporter aussi un second circuit de déclenchement 21 dont l'entrée est reliée à la sortie du second circuit de surveillance 23, et la sortie est connectée à une seconde sortie de commande 26. L'utilisation du second circuit de déclenchement 21 sera explicitée ultérieurement par la figure 4.

Ainsi, une anomalie de fonctionnement de la première unité de traitement sera détectée par la seconde unité de traitement et une signalisation sera activée au moyen de l'auxiliaire de commande 32. Une anomalie de fonctionnement de la seconde unité de traitement sera détectée par la première unité de traitement et l'actionneur 31 sera activé. Le dispositif de surveillance de l'invention effectue une surveillance mutuelle de chaque unité de traitement avec une grande efficacité puisque le dispositif réutilise le premier circuit de déclenchement 11, le premier circuit de commande 30 et l'auxiliaire de commande 32 qui sont des ressources existantes du déclencheur électrique et nécessite seulement un circuit indicateur d'activité 12, 22 et un circuit de surveillance 13, 23 à l'intérieur de chaque unité de traitement.

Les fonctions utilisées pour la surveillance du fonctionnement et exécutées par les circuits 12, 13, 22 et 23 peuvent être réalisées au moyen de circuits logiques intégrés respectivement dans chaque unité de traitement 10, 20, à l'aide de composants câblés ou de code de programmation exécuté par un microprocesseur ou par un automate. La liaison entre la première sortie d'activité 17 et la seconde entrée 28 du second circuit de surveillance 23 ou la liaison entre la seconde sortie d'activité 27 et la première entrée 18 du premier circuit de surveillance 13 sont représentées sous forme de liaisons filaires sur les figure 1, 2 et 4 correspondant à un mode de réalisation préférentiel. Lesdites liaisons peuvent également être réalisées par des moyens optiques ou électromagnétiques ou encore par une combinaison de plusieurs des technologies citées.

Pour accroître le niveau de surveillance, la vérification de la bonne connexion entre la première sortie de commande 16 et l'entrée 19 du premier circuit de commande d'actionneur 30 est utile. En effet, ladite liaison est préférentiellement réalisée au moyen d'un circuit imprimé et/ou des fils munis de connecteurs, soumis, comme l'ensemble du déclencheur électrique 1, à des variations thermiques, à des vibrations mécaniques et soumis au vieillissement. Une rupture de ladite connexion interdit toute commande de l'actionneur 31 même si la première unité de traitement fonctionne parfaitement.

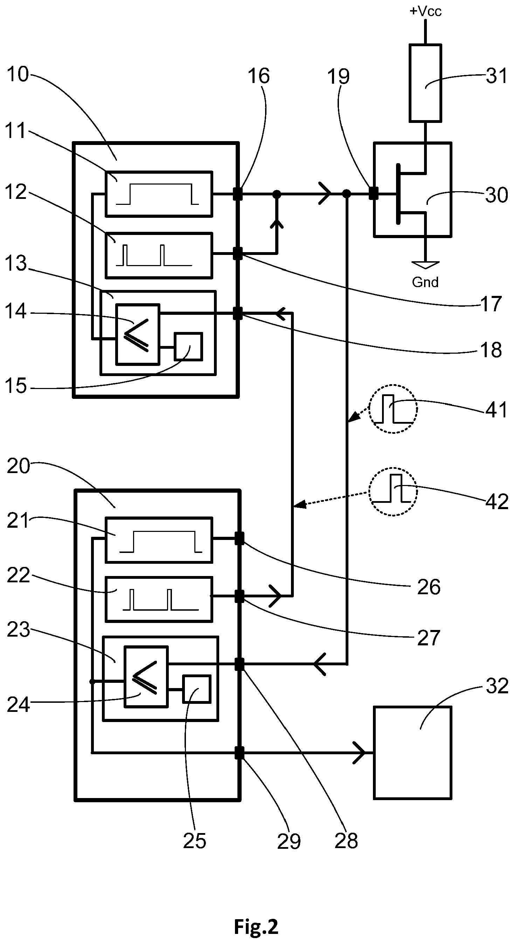

La figure 2 représente une variante du dispositif de surveillance d'un déclencheur électrique selon un second mode de réalisation permettant de surveiller la connexion entre la première sortie de commande 16 et l'entrée 19 du premier circuit de commande d'actionneur 30. La première sortie d'activité 17 est connectée à la première sortie de commande 16, et la seconde entrée 28 est connectée à l'entrée de commande 19 du premier circuit de commande 30. Ainsi, le premier signal d'activité 41, émis par le premier circuit indicateur d'activité 12, chemine sur la connexion entre la première sortie de commande 16 et l'entrée 19 du premier circuit de commande d'actionneur 30. Une éventuelle rupture de ladite connexion sera décelée par le second circuit de surveillance 23 puisque ledit second circuit ne recevra plus le premier signal d'activité 41. De cette façon, une vérification permanente de la connexion entre la première sortie de commande 16 et l'entrée 19 du premier circuit de commande d'actionneur 30 est effectuée sans circuit supplémentaire, ni traitement particulier du signal d'activité 41. La connexion entre la première sortie d'activité 17 et la première sortie de commande 16 peut être réalisée soit à l'extérieur de l'unité de traitement 10 telle que représentée sur la figure 2, soit à l'intérieur de l'unité de traitement 10.

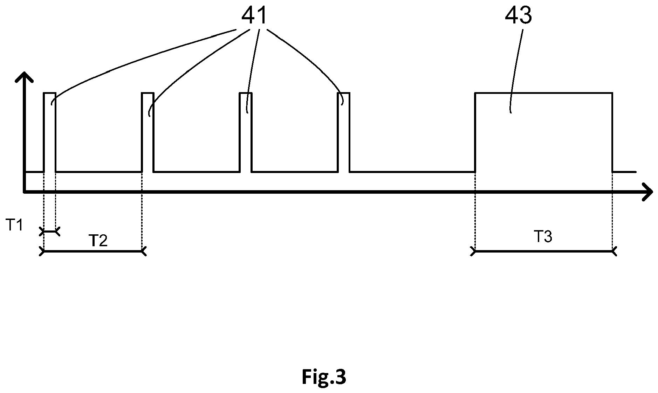

Pour éviter que le premier signal d'activité 41 n'active le circuit de commande d'actionneur 30, la durée T1 du premier signal d'activité 41 est sensiblement inférieure au temps T3 nécessaire pour activer le premier circuit de commande d'actionneur 30. La figure 3 illustre une forme d'onde du premier signal d'activité 41 ainsi qu'une onde d'activation 43 du premier circuit de commande d'actionneur. Préférentiellement T1 est compris entre 1 et 10 µs. La période d'émission T2 est préférentiellement inférieure ou égale à 10 ms, de manière à pouvoir réagir, par exemple, en un temps inférieur au temps minimal de réaction d'une fonction de protection demandé par la norme IEC61508. La durée du second signal d'activité 42 dans la configuration illustrée par les figures 1 ou 2 n'a pas d'influence puisque sans effet possible sur le premier circuit de commande d'actionneur 30. L'activation de l'actionneur 31 nécessite une impulsion 43 de durée T3 préférentiellement supérieure à 500 µs, comprise entre 1 ms et 2 ms dans les modes de réalisation décrits par l'invention. T1 étant significativement inférieur à T3, le premier signal d'activité 41 ne peut être à l'origine de l'activation du circuit de commande d'actionneur 30.

Dans le cas d'une défaillance de la première unité de traitement 10, la seconde unité de traitement 20 active l'auxiliaire de commande 32. Le temps de réaction dudit auxiliaire peut être jugé trop long en regard du risque provoqué par la défaillance de la première unité de traitement 10. Il est possible d'accroitre la sûreté de fonctionnement du dispositif de surveillance et la rapidité de réaction à une défaillance en ajoutant un second circuit de commande d'actionneur 33 selon un mode de réalisation préférentiel de l'invention représenté en figure 4. Le second circuit de commande d'actionneur 33 est connecté en parallèle sur le premier circuit de commande 30. Ledit second circuit de commande 33 est relié à l'actionneur 31 pour activer l'actionneur quand ledit circuit reçoit une commande sur une entrée de commande 34. L'entrée de commande 34 est reliée à la seconde entrée 18, ladite seconde entrée 18 étant reliée à la seconde sortie d'activité 27. De manière identique à la première unité de traitement 10, la seconde sortie de commande 26 du second circuit de déclenchement 21 est reliée à l'entrée de commande 34 du second circuit de commande 33. La connexion entre la seconde sortie d'activité 27 et la seconde sortie de commande 26 peut être réalisée soit à l'extérieur de l'unité de traitement 20 telle que représentée sur la figure 4, soit à l'intérieur de l'unité de traitement 20. Ainsi, en cas de défaillance de la première unité de traitement, le second circuit de surveillance 23 active le second circuit de déclenchement 21 et ledit second circuit de déclenchement 21 active à son tour une commande de l'actionneur 31 au moyen du circuit 33. La rapidité de réaction à une défaillance de la première unité de traitement est ainsi accrue, la mise en position de sécurité du déclencheur électrique est très rapide.

Le dispositif de surveillance de l'invention est destiné préférentiellement à surveiller le fonctionnement d'un déclencheur 1 implanté dans un appareil de protection électrique de type disjoncteur. Un disjoncteur est un appareil de protection utilisé dans une installation de distribution d'énergie électrique pour assurer la protection de l'installation contre les surcharges d'ordre électrique, les courts-circuits ou les défauts d'isolement. La figure 5 est une représentation schématique d'un disjoncteur 50 comportant un déclencheur 1 intégrant un dispositif de surveillance selon l'invention. Le disjoncteur 50 est généralement installé sur un réseau de distribution d'énergie électrique triphasé et comporte trois conducteurs de courant 52, un conducteur de courant correspondant à une phase du réseau électrique. Un quatrième conducteur de courant peut être utilisé comme conducteur de neutre. Un capteur de courant 51 fournit un signal représentatif du courant circulant dans chaque conducteur de courant 52. Un déclencheur 1 comporte au moins une première et une seconde unités de traitement 10, 20 connectées auxdits capteurs de courant 51 et adaptées pour recevoir au moins un signal représentatif du courant circulant dans chacun des conducteurs de courant 51. En variante non représentée sur la figure 5, la première ou la seconde unité de traitement 10, 20 peuvent être connectées aux conducteurs de courant 52 pour mesurer la tension entre conducteurs de courant afin de pouvoir calculer la puissance et/ou l'énergie électrique circulant dans l'installation. Les contacts 53 du disjoncteur 50 sont actionnés par un mécanisme d'ouverture et fermeture des contacts électriques 54. Ledit mécanisme est actionné par l'actionneur 31. Ainsi, en cas de surintensité Icc dans un des conducteurs de courant, le déclencheur 1 active le circuit de commande 30 afin de commander l'ouverture du circuit électrique au moyen au moyen de l'actionneur 31. Le défaut est ainsi éliminé.

Un disjoncteur est un organe de sécurité, son fonctionnement doit être sûr. Ainsi, un dispositif de surveillance tel que décrit dans l'invention apporte un niveau de sûreté supplémentaire dans l'installation électrique en signalant ou en mettant l'installation électrique hors tension en cas de défaut interne au disjoncteur, empêchant le disjoncteur de remplir ses fonctions de protection. Le dispositif de surveillance décrit utilise peu de ressources dans chaque unité de traitement et son coût est faible, il est donc particulièrement adapté à une utilisation industrielle. D'autre part le fonctionnement du dispositif de surveillance apporte très peu de contrainte sur le fonctionnement des unités de traitement, il peut être utilisé dans tout type de matériel électrique : relais de protection, automate programmable, appareil de contrôle, appareil de supervision, machine de fabrication, appareil fonctionnant en environnement dangereux ou présentant des risques pour les biens ou les personnes et, de manière plus générale, tout matériel nécessitant un premier niveau de sûreté de fonctionnement.

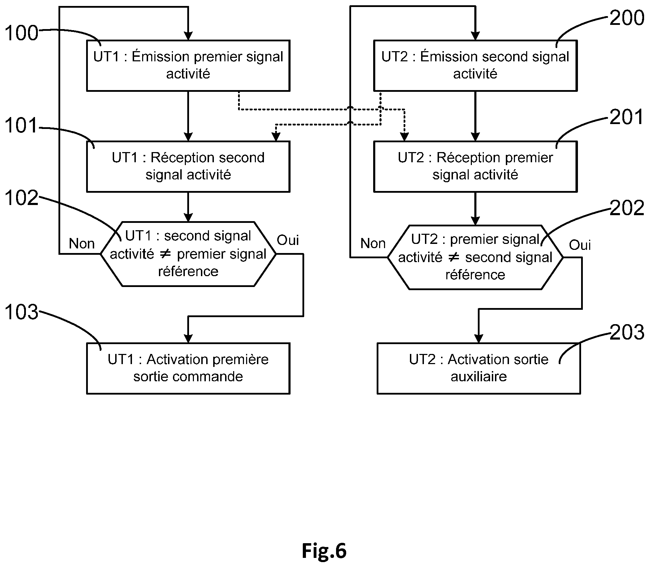

L'invention porte également sur un procédé de surveillance du fonctionnement d'un déclencheur électrique. La figure 6 représente un organigramme illustrant le fonctionnement du procédé de surveillance selon les modes de réalisation de l'invention représentés en figure 1 et en figure 2.

Le procédé comporte une étape d'émission 100 par la première unité de traitement 10 du premier signal d'activité 41. Parallèlement, de façon synchrone ou asynchrone, la seconde unité de traitement 20 émet le second signal d'activité 42 au cours d'une étape 200. Le procédé comporte ensuite les étapes suivantes :
- étape de réception 101 par la première unité de traitement 10 du second signal d'activité 42, et parallèlement,
- étape de réception 201 par la seconde unité de traitement 20 du premier signal d'activité 41.

Chaque unité de traitement va procéder, de son côté, au traitement du signal d'activité qui a été reçu :
- la première unité de traitement 10 effectue au cours de l'étape 102 une comparaison du second signal d'activité 42 reçu avec le premier signal de référence 15, et quand le second signal d'activité 42 est différent du premier signal de référence 15, active la première sortie de commande 16 de l'actionneur au cours de l'étape 103. Si le second signal d'activité 42 est identique au premier signal de référence 15, retour à l'étape d'émission 100 du premier signal d'activité, et
- la seconde unité de traitement 20 effectue au cours de l'étape 202 une comparaison du premier signal d'activité 41 reçu avec le second signal de référence 25, et quand le premier signal d'activité 41 est différent du second signal de référence 25, active la sortie auxiliaire 29 au cours de l'étape 203. Si le premier signal d'activité 41 est identique au second signal de référence 25, retour à l'étape d'émission 200 du second signal d'activité.

Il est visible que les étapes 100, 101, 200 et 201 sont liées entre elles, illustrant ainsi la surveillance mutuelle exercée par chaque unité de traitement sur l'autre unité de traitement. Selon que la défaillance provient de la première ou de la seconde unité de traitement, un organe différent sera activé : la première sortie de commande 16 active l'actionneur 31 si la seconde unité de traitement 20 est défaillante, l'auxiliaire de commande 32 sera activé si la première unité de traitement 10 est défaillante.

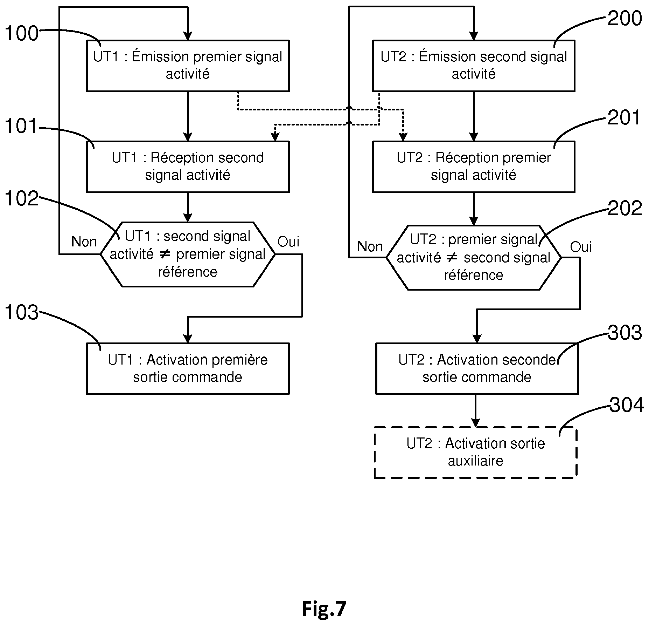

La figure 7 représente un organigramme illustrant le fonctionnement du procédé de surveillance selon le mode de réalisation préférentiel représenté en figure 4.

Les étapes de procédé 100 à 103 et 200, 201 et 202 sont identiques aux étapes décrites à la figure 6. En revanche, quand le premier signal d'activité 41 est différent du second signal de référence 25, la seconde unité de traitement active la seconde sortie de commande 26 au cours de l'étape 303. En option, au cours d'une étape 304, la seconde unité de traitement active l'auxiliaire de commande 32 permettant de signaler la défaillance, par exemple, au moyen d'un voyant ou d'un moyen de communication vers un système de supervision.

## Revendications

1. Dispositif de surveillance de l'activité d'au moins une première et une seconde unités de traitement (10, 20) équipant un déclencheur électrique (1), la première unité de traitement (10) comportant un premier circuit indicateur d'activité (12) émettant un premier signal d'activité (41) sur une première sortie d'activité (17),
- la première unité de traitement (10) comportant, en outre,
- une première entrée (18) pour recevoir un second signal d'activité (42), et
- un premier circuit de surveillance (13), connecté à la première entrée (18), pour surveiller l'activité de la seconde unité de traitement (20), le premier circuit de surveillance (13) comparant le second signal d'activité (42) reçu sur la première entrée (18) à un premier signal de référence (15) et activant un premier circuit de déclenchement (11) quand le second signal d'activité (42) est différent du premier signal de référence (15), et
- la seconde unité de traitement comportant :
- une seconde entrée (28) pour recevoir le premier signal d'activité (41),
- un second circuit indicateur d'activité (22) émettant le second signal d'activité (42) sur une seconde sortie d'activité (27), et
- un second circuit de surveillance (23), connecté à la seconde entrée (28), pour surveiller l'activité de la première unité de traitement (10),
ledit dispositif de surveillance étant **caractérisé en ce que** le premier circuit de déclenchement (11) dispose d'une première sortie de commande (16), connectée à une entrée de commande (19) d'un premier circuit de commande (30), pour activer ledit premier circuit de commande (30).

2. Dispositif de surveillance selon la revendication 1 **caractérisé en ce que** le second circuit de surveillance (23) compare le premier signal d'activité (41) reçu sur la seconde entrée (28) à un second signal de référence (25) et active une sortie auxiliaire (29) quand le premier signal d'activité (41) est différent du second signal de référence (25).

3. Dispositif de surveillance selon l'une des revendications 1 ou 2 **caractérisé en ce que** :
- la première sortie d'activité (17) est connectée à la première sortie de commande (16), et
- la seconde entrée (28) est connectée à l'entrée de commande (19) du premier circuit de commande (30) pour recevoir le premier signal d'activité (41).

4. Dispositif de surveillance selon l'une des revendications précédentes **caractérisé en ce qu'**il comporte un second circuit de commande de l'actionneur (33) connecté en parallèle avec le premier circuit de commande de l'actionneur (30) et que la seconde unité de traitement (20) comporte un second circuit de déclenchement (21), connecté au second circuit de commande (33), pour activer ledit second circuit de commande (33).

5. Dispositif de surveillance selon la revendication 4 **caractérisé en ce que** la seconde sortie d'activité (27) est connectée au second circuit de commande de l'actionneur (33).

6. Dispositif de surveillance selon la revendication 5 **caractérisé en ce que** le second circuit de surveillance (23) compare le premier signal d'activité (41) reçu sur la seconde entrée (28) au second signal de référence (25) et active le second circuit de déclenchement (21) quand le premier signal d'activité (41) est différent du second signal de référence (25).

7. Dispositif de surveillance selon l'une quelconque des revendications 4 à 6 **caractérisé en ce que** la durée (T1) du premier signal d'activité (41) ou du second signal d'activité (42) est significativement inférieure à la durée (T3) du signal d'activation du premier circuit de commande d'actionneur (30) ou du second circuit de commande d'actionneur (33).

8. Dispositif de surveillance selon la revendication 7 **caractérisé en ce que** la durée (T1) du premier signal d'activité (41) ou du second signal d'activité (42) est comprise entre 1 et 10 µs et que la période entre deux signaux d'activité consécutifs est sensiblement égale à 10 ms.

9. Disjoncteur (50) destiné à la protection d'une installation électrique comportant :
- des capteurs de courant (51) délivrant un signal représentatif du courant circulant dans des conducteurs de courant (52),
- des contacts électriques (53),
- un mécanisme d'ouverture des contacts (54),
- un actionneur de déclenchement (31) pour actionner le mécanisme d'ouverture des contacts (53), et
- un déclencheur électrique (1) comportant une première unité de traitement (10) et une seconde unité de traitement (20), ledit déclencheur (1) étant connecté aux capteurs de courant (51) et à l'actionneur (31) pour fournir une commande de déclenchement en fonction du signal délivré par lesdits capteurs de courant (51), **caractérisé en ce que** ledit déclencheur (1) comporte un dispositif de surveillance de l'activité des unités de traitement (10, 20) selon l'une quelconque des revendications précédentes.

10. Disjoncteur (50) selon la revendication 9 **caractérisé en ce que**, dans le déclencheur électrique (1) :
- la première unité de traitement (10) active le premier circuit de déclenchement (11) quand le signal représentatif du courant circulant dans les conducteurs de courant (52) dépasse un seuil de surintensité (Icc) déterminé, et
- la seconde unité de traitement effectue des calculs de puissance et/ou d'énergie.

11. Procédé de surveillance de l'activité d'au moins une première et une seconde unités de traitement (10, 20) destinées au fonctionnement d'un déclencheur électrique (1) comportant un dispositif de surveillance de l'activité selon l'une des revendications 1 à 8, **caractérisé en ce que** ledit procédé comporte les étapes suivantes :
- une émission (100) par la première unité de traitement (10) du premier signal d'activité (41),
- une réception (101) par la première unité de traitement (10) du second signal d'activité (42), et, parallèlement,
- une réception (201) par la seconde unité de traitement (20) du premier signal d'activité (41),
- une émission (200) par la seconde unité de traitement (20) du second signal d'activité (42),
- une comparaison (102) du second signal d'activité (42) reçu par la première unité de traitement (10) à un premier signal de référence (15), et
- une activation (103) de la première sortie de commande (16) de l'actionneur quand le second signal d'activité (42) est différent du premier signal de référence (15), sinon un retour à l'étape d'émission (100) du premier signal d'activité.

12. Procédé de surveillance du fonctionnement d'un déclencheur électrique (1) selon la revendication 11 **caractérisé en ce qu'**il comporte les étapes suivantes :
- une comparaison (202) du premier signal d'activité (41) reçu par la seconde unité de traitement (20) à un second signal de référence (25),
- une activation (203) de la sortie auxiliaire (29) quand le premier signal d'activité (41) est différent du second signal de référence (25).

13. Procédé de surveillance du fonctionnement d'un déclencheur électrique (1) selon la revendication 12 **caractérisé en ce qu'**il comporte les étapes suivantes :
- une activation (303) de la seconde sortie de commande (26) quand le premier signal d'activité (41) est différent du second signal de référence (25).

## Patentansprüche

1. Vorrichtung zur Überwachung der Aktivität mindestens einer ersten und einer zweiten Verarbeitungseinheit (10, 20), mit denen ein elektrischer Auslöser (1) ausgestattet ist, wobei die erste Verarbeitungseinheit (10) einen ersten Aktivitätsanzeigekreis (12) aufweist, der ein erstes Aktivitätssignal (41) an einem ersten Aktivitätsausgang (17) sendet,
- wobei die erste Verarbeitungseinheit (10) außerdem aufweist
- einen ersten Eingang (18), um ein zweites Aktivitätssignal (42) zu empfangen, und
- einen ersten Überwachungskreis (13), der an den ersten Eingang (18) angeschlossen ist, um die Aktivität der zweiten Verarbeitungseinheit (20) zu überwachen, wobei der erste Überwachungskreis (13) das am ersten Eingang (18) empfangene zweite Aktivitätssignal (42) mit einem ersten Bezugssignal (15) vergleicht und einen ersten Auslösekreis (11) aktiviert, wenn das zweite Aktivitätssignal (42) sich vom ersten Bezugssignal (15) unterscheidet, und
- wobei die zweite Verarbeitungseinheit aufweist:
- einen zweiten Eingang (28), um das erste Aktivitätssignal (41) zu empfangen,
- einen zweiten Aktivitätsanzeigekreis (22), der das zweite Aktivitätssignal (42) an einem zweiten Aktivitätsausgang (27) sendet, und
- einen zweiten Überwachungskreis (23), der an den zweiten Eingang (28) angeschlossen ist, um die Aktivität der ersten Verarbeitungseinheit (10) zu überwachen;
wobei die Überwachungsvorrichtung **dadurch gekennzeichnet ist, dass** der erste Auslösekreis (11) über einen ersten Steuerausgang (16) verfügt, der an einen Steuereingang (19) eines ersten Steuerkreises (30) angeschlossen ist, um den ersten Steuerkreis (30) zu aktivieren.

2. Überwachungsvorrichtung nach Anspruch 1, **dadurch gekennzeichnet, dass** der zweite Überwachungskreis (23) das am zweiten Eingang (28) empfangene erste Aktivitätssignal (41) mit einem zweiten Bezugssignal (25) vergleicht und einen Hilfsausgang (29) aktiviert, wenn das erste Aktivitätssignal (41) sich vom zweiten Bezugssignal (25) unterscheidet.

3. Überwachungsvorrichtung nach einem der Ansprüche 1 oder 2, **dadurch gekennzeichnet, dass**:
- der erste Aktivitätsausgang (17) an den ersten Steuerausgang (16) angeschlossen ist, und
- der zweite Eingang (28) an den Steuereingang (19) des ersten Steuerkreises (30) angeschlossen ist, um das erste Aktivitätssignal (41) zu empfangen.

4. Überwachungsvorrichtung nach einem der vorhergehenden Ansprüche, **dadurch gekennzeichnet, dass** sie einen zweiten Steuerkreis des Aktuators (33) aufweist, der mit dem ersten Steuerkreis des Aktuators (30) parallelgeschaltet ist, und dass die zweite Verarbeitungseinheit (20) einen zweiten Auslösekreis (21) aufweist; der an den zweiten Steuerkreis (33) angeschlossen ist, um den zweiten Steuerkreis (33) zu aktivieren.

5. Überwachungsvorrichtung nach Anspruch 4, **dadurch gekennzeichnet, dass** der zweite Aktivitätsausgang (27) an den zweiten Steuerkreis des Aktuators (33) angeschlossen ist.

6. Überwachungsvorrichtung nach Anspruch 5, **dadurch gekennzeichnet, dass** der zweite Überwachungskreis (23) das am zweiten Eingang (28) empfangene erste Aktivitätssignal (41) mit dem zweiten Bezugssignal (25) vergleicht und den zweiten Auslösekreis (21) aktiviert, wenn das erste Aktivitätssignal (41) sich vom zweiten Bezugssignal (25) unterscheidet.

7. Überwachungsvorrichtung nach einem der Ansprüche 4 bis 6, **dadurch gekennzeichnet, dass** die Dauer (T1) des ersten Aktivitätssignals (41) oder des zweiten Aktivitätssignals (42) deutlich kürzer ist als die Dauer (T3) des Aktivierungssignals des ersten Aktuator-Steuerkreises (30) oder des zweiten Aktuator-Steuerkreises (33).

8. Überwachungsvorrichtung nach Anspruch 7, **dadurch gekennzeichnet, dass** die Dauer (T1) des ersten Aktivitätssignals (41) oder des zweiten Aktivitätssignals (42) zwischen 1 und 10 µs liegt, und dass die Periode zwischen zwei aufeinanderfolgenden Aktivitätssignalen im Wesentlichen gleich 10 ms ist.

9. Schutzschalter (50), der zum Schutz einer elektrischen Anlage bestimmt ist, der aufweist:
- Stromsensoren (51), die ein für den in Stromleitern (52) fließenden Strom repräsentatives Signal liefern,
- elektrische Kontakte (53),
- einen Öffnungsmechanismus der Kontakte (54),
- einen Auslöseaktuator (31), um den Öffnungsmechanismus der Kontakte (53) zu betätigen, und
- einen elektrischen Auslöser (1), der eine erste Verarbeitungseinheit (10) und eine zweite Verarbeitungseinheit (20) aufweist, wobei der Auslöser (1) an die Stromsensoren (51) und an den Aktuator (31) angeschlossen ist, um eine Auslösesteuerung abhängig von dem von den Stromsensoren (51) ausgegebenen Signal zu liefern,
**dadurch gekennzeichnet, dass** der Auslöser (1) eine Überwachungsvorrichtung der Aktivität der Verarbeitungseinheiten (10, 20) nach einem der vorhergehenden Ansprüche aufweist.

10. Schutzschalter (50) nach Anspruch 9, **dadurch gekennzeichnet, dass** im elektrischen Auslöser (1):
- die erste Verarbeitungseinheit (10) den ersten Auslösekreis (11) aktiviert, wenn das für den in den Stromleitern (52) fließenden Strom repräsentative Signal eine bestimmte Überstromschwelle (Icc) überschreitet, und
- die zweite Verarbeitungseinheit Leistungs- und/oder Energieberechnungen ausführt.

11. Verfahren zur Überwachung der Aktivität mindestens einer ersten und einer zweiten Verarbeitungseinheit (10, 20), die für den Betrieb eines elektrischen Auslösers (1) bestimmt sind, der eine Überwachungsvorrichtung der Aktivität nach einem der Ansprüche 1 bis 8 aufweist, **dadurch gekennzeichnet, dass** das Verfahren die folgenden Schritte aufweist:
- Senden (100) des ersten Aktivitätssignals (41) durch die erste Verarbeitungseinheit (10),
- Empfang (101) des zweiten Aktivitätssignals (42) durch die erste Verarbeitungseinheit (10); und parallel dazu
- Empfang (201) des ersten Aktivitätssignals (41) durch die zweite Verarbeitungseinheit (20),
- Senden (200) des zweiten Aktivitätssignals (42) durch die zweite Verarbeitungseinheit (20),
- Vergleich (102) des von der ersten Verarbeitungseinheit (10) empfangenen zweiten Aktivitätssignals (42) mit einem ersten Bezugssignal (15), und
- Aktivierung (103) des ersten Steuerausgangs (16) des Aktuators, wenn das zweite Aktivitätssignal (42) sich vom ersten Bezugssignal (15) unterscheidet, sonst Rückkehr zum Sendeschritt (100) des ersten Aktivitätssignals.

12. Überwachungsverfahren des Betriebs eines elektrischen Auslösers (1) nach Anspruch 11, **dadurch gekennzeichnet, dass** es die folgenden Schritte aufweist:
- Vergleich (202) des von der zweiten Verarbeitungseinheit (20) empfangenen ersten Aktivitätssignals (41) mit einem zweiten Bezugssignal (25),
- Aktivierung (203) des Hilfsausgangs (29), wenn das erste Aktivitätssignal (41) sich vom zweiten Bezugssignal (25) unterscheidet.

13. Überwachungsverfahren des Betriebs eines elektrischen Auslösers (1) nach Anspruch 12, **dadurch gekennzeichnet, dass** es den folgenden Schritt aufweist:
- Aktivierung (303) des zweiten Steuerausgangs (26), wenn das erste Aktivitätssignal (41) sich vom zweiten Bezugssignal (25) unterscheidet.

## Claims

1. Device to monitor the activity of at least one first and one second processing units (10, 20) fitted to an electric trip switch (1), the first processing unit (10) comprising a first activity-indicating circuit (12) sending a first activity signal (41) on a first activity output (17),
- the first processing unit (10) further comprising,
- a first input (18) to receive a second activity signal (42), and
- a first monitoring circuit (13), connected to the first input (18), to monitor the activity of the second processing unit (20), the first monitoring circuit (13) comparing the second activity signal (42) received on the first input (18) with a first reference signal (15) and activating a first tripping circuit (11) when the second activity signal (42) is different from the first reference signal (15), and
- the second processing unit comprising:
- a second input (28) to receive the first activity signal (41),
- a second activity-indicating circuit (22) sending the second activity signal (42) on a second activity output (27), and
- a second monitoring circuit (23), connected to the second input (28), to monitor the activity of the first processing unit (10),
said monitoring device being **characterized in that** the first tripping circuit (11) has a first control output (16), connected to a control input (19) of a first control circuit (30), to activate said first control circuit (30).

2. Monitoring device according to Claim 1, **characterized in that** the second monitoring circuit (23) compares the first activity signal (41) received on the second input (28) with a second reference signal (25) and activates an auxiliary output (29) when the first activity signal (41) is different from the second reference signal (25).

3. Monitoring device according to one of Claims 1 and 2, **characterized in that**:
- the first activity output (17) is connected to the first control output (16), and
- the second input (28) is connected to the control input (19) of the first control circuit (30) to receive the first activity signal (41).

4. Monitoring device according to one of the preceding claims, **characterized in that** it comprises a second actuator control circuit (33) connected in parallel with the first actuator control circuit (30) and that the second processing unit (20) comprises a second tripping circuit (21), connected to the second control circuit (33), to activate said second control circuit (33).

5. Monitoring device according to Claim 4 **characterized in that** the second activity output (27) is connected to the second actuator control circuit (33).

6. Monitoring device according to Claim 5 **characterized in that** the second monitoring circuit (23) compares the first activity signal (41) received on the second input (28) with the second reference signal (25) and activates the second tripping circuit (21) when the first activity signal (41) is different from the second reference signal (25).

7. Monitoring device according to any one of Claims 4 to 6, **characterized in that** the duration (T1) of the first activity signal (41) or of the second activity signal (42) is significantly shorter than the duration (T3) of the activation signal of the first actuator control circuit (30) or of the second actuator control circuit (33).

8. Monitoring device according to Claim 7 **characterized in that** the duration (T1) of the first activity signal (41) or of the second activity signal (42) is between 1 and 10 µs and that the period between two consecutive activity signals is substantially equal to 10 ms.

9. Circuit breaker (50) intended to protect an electrical installation comprising:
- current sensors (51) delivering a signal representative of the current circulating in current conductors (52),
- electrical contacts (53),
- a contact opening mechanism (54),
- a tripping actuator (31) to actuate the contact opening mechanism (53), and
- an electric trip switch (1) comprising a first processing unit (10) and a second processing unit (20), said trip switch (1) being connected to the current sensors (51) and to the actuator (31) to supply a trip command as a function of the signal delivered by said current sensors (51), **characterized in that** said trip switch (1) comprises a device for monitoring the activity of the processing units (10, 20) according to any one of the preceding claims.

10. Circuit breaker (50) according to Claim 9, **characterized in that**, in the electric trip switch (1):
- the first processing unit (10) activates the first tripping circuit (11) when the signal representative of the current circulating in the current conductors (52) exceeds a determined overcurrent threshold (Icc), and
- the second processing unit performs power and/or energy computations.

11. Method for monitoring the activity of at least one first and one second processing units (10, 20) intended to operate an electric trip switch (1) comprising an activity monitoring device according to one of Claims 1 to 8, **characterized in that** said method comprises the following steps:
- a sending (100) by the first processing unit (10), of the first activity signal (41),
- a reception (101) by the first processing unit (10) of the second activity signal (42), and, in parallel,
- a reception (201) by the second processing unit (20) of the first activity signal (41),
- a sending (200) by the second processing unit (20) of the second activity signal (42),
- a comparison (102) of the second activity signal (42) received by the first processing unit (10) with a first reference signal (15), and
- an activation (103) of the first control output (16) of the actuator when the second activity signal (42) is different from the first reference signal (15), otherwise a return to the step of sending (100) of the first activity signal.

12. Method for monitoring the operation of an electric trip switch (1) according to Claim 11, **characterized in that** it comprises the following steps:
- a comparison (202) of the first activity signal (41) received by the second processing unit (20) with a second reference signal (25),
- an activation (203) of the auxiliary output (29) when the first activity signal (41) is different from the second reference signal (25).

13. Method for monitoring the operation of an electric trip switch (1) according to Claim 12, **characterized in that** it comprises the following steps:
- an activation (303) of the second control output (26) when the first activity signal (41) is different from the second reference signal (25).
